# EUROPEAN PATENT SPECIFICATION

(11) **EP 3 013 136 B1**
(45) Date of publication and mention of the grant of the patent: **28.02.2018**
(21) Application number: 14738415.0
(22) Date of filing: 20.06.2014
(51) Int. Cl.: A01G 1/04

(54) **HOLDER AND METHOD FOR THE COMMERCIAL GROWING, STORAGE, TRANSPORTATION AND/OR SALE OF MUSHROOMS**
HALTER UND VERFAHREN ZUR KOMMERZIELLEN ZÜCHTUNG, LAGERUNG, TRANSPORT UND/ODER VERKAUF VON PILZEN
SUPPORT ET PROCÉDÉ DE CULTURE, STOCKAGE, TRANSPORT ET/OU VENTE DE CHAMPIGNONS POUR LE COMMERCE

(30) Priority: 28.06.2013 BE 201300455
(43) Date of publication of application: 04.05.2016
(73) Proprietor: Archiduc Usil BVBA, 9930 Zomergem (BE)
(72) Inventor: LAPIERRE, Hilde, B-9930 Zomergem (BE); VAN ROBAYS, Steven, B-9930 Zomergem (BE)
(74) Representative: De Clercq, Ann G. Y.
(86) International application number: PCT/EP2014/062989
(87) International publication number: WO 2014/206870

(56) References cited:
- WO-A1-91/18498
- WO-A2-2009/051481
- GB-A- 2 094 273
- US-A- 4 291 494
- US-A1- 2012 247 007

## Description

### TECHNICAL FIELD

The invention relates to a holder containing mushrooms, and the use thereof, for the commercial growing, storage, transportation and/or sale of mushrooms. The invention likewise relates to a method for the commercial growing, storage, transportation and/or sale of mushrooms.

### TECHNOLOGICAL BACKGROUND OF THE INVENTION

In present-day large-scale or commercial mushroom cultivation operations, white mushrooms, chestnut mushrooms or similar mushrooms are always cultivated in cultivation beds. The compost or mushroom substrate is brought in a layer of constant thickness onto the mushroom beds, and subsequently covered with a thin layer of casing soil for the desired water management during the growth. After 10-21 days, the mushrooms can be harvested. That harvesting is done manually and is very labor-intensive with difficult working conditions and irregular hours.

In a traditional cultivation operation, the mushroom is very susceptible to various diseases which can be spread like lightning through contact with pickers, packaging, flies, or through dispersion of spores of the mushroom. The use of control means is hence essential. The large-scale cultivation of biologically reared mushrooms is thus also almost impossible.

During the cultivation, large quantities of substrate and topsoil are necessary and a great deal of energy is expended in order to bring the installations to, and keep them at, the desired temperatures.

Certain countries do not have the climate or the culture to grow mushrooms and are reliant on importing them. Thus in Brazil, Salvador, for examples, no fresh mushrooms are on sale. Importation from distant countries clearly requires a controlled system to guarantee the freshness of the product. Harvested mushrooms have the drawback that after a few days they acquire a brown color and develop spore formation. The maintenance of the freshness of mushrooms, in particular during long-distance transport, thus poses a major problem.

In summary, the present invention provides a solution to the above problems by guaranteeing the following aspects: 1/ a lower substrate requirement, 2/ a higher product freshness (farther transport and longer storage possible), 3/ improved biological disease control, 4/ cheaper product (as a result of lower labor costs and energy consumption) 5/ better controlling and optimization of growth conditions (resulting in higher production and cheaper product), 6/ new treatment methods possible and/or wetting systems applicable, such as immersion, 7/ use of small cultivation cells possible, 8/ unhindered growth of the mushrooms, including on the edge of the cultivation cell. 9/ better working conditions for the workers (less labor-intensive), and 10/ simple and controlled transport. The growth of the mushroom in a holder as described according to the invention is non-existent. The inventors unexpectedly found that, through use of the holder of the invention, a high-grade product of constant quality can be obtained.

The invention sets out to develop a durable production process, inclusive of final packaging, for cultivating different varieties of mushrooms and exporting them worldwide. The invention is primarily geared to the process for the cultivation and production of the white mushroom and the brown or chestnut mushroom; the invention can be opened up, however, to all existing varieties of mushroom. A cheaper product and preferably fully biological product can be cultivated with increased production and increased quality (essentially freshness).

The invention is also geared to a climate-constant packaging in which growth conditions can be regulated on a small scale, in dependence on the growth requirements of the mycelium and/or fruit bodies of the mushrooms. Thus the quality of the desired fruit bodies for consumption is improved and this allow the consumer to harvest various rounds of the mushrooms.

The object of the invention is also to set up a production process whereby the energy consumption for the cultivation of the mushrooms is lowered. Through the use of the holder according to the invention, the cultivation and growth of the mushrooms can be optimized (temperature, moisture, CO₂ (carbon dioxide)).

Patent WO 91/18498 describes a saleable holder of edible mushrooms containing the mold in the presence of a medium that supports fructification (= fruiting) and growth. This medium conforms to the mushroom growth layer or casing layer in the holder of the present invention. In WO 91/18498, the growth of the mushroom is substantially dependent, however, on the compost which is supplied as external medium in the form of a traditional cultivation bed. This invention simply provides a possibility of simplifying the harvesting and of partially further increasing the freshness of the mushrooms, but does not result in the effects obtained by virtue of the holder of the present invention.

WO 2009/051481 relates to a cultivation arrangement for cultivating mushrooms, comprising a tray open at the top, containing perfoliate compost covered by a layer of casing soil, and a traylike lid which is open at the bottom and is pushed over the tray. The lid is provided with locking means which lock the lid in raised position against sliding downwards, and further locking means which support a raised plate. This plate functions as a water reservoir which is connected to the space above the compost covered by the casing soil and present in the tray.

US 2012/0247007 describes a device for production of mushrooms comprising two parts, one basal plate perforated with holes for the mushroom pins to emerge into the container. The apertures/holes on the base of the container may be covered with casing material. The other portion is the top part functioning as a cover which could be used to secure the container in order to prevent contamination from outside, maintain the moisture level and also maintains the micro environment for growing mushrooms.

### SUMMARY

The invention comprises a holder containing mushrooms for the commercial growing, storage, transportation and/or sale of mushrooms, comprising:
a base part, and a transparent top part comprising one or more perforations,
characterized in that the base part of the holder is the bearer of a solid mushroom growth medium which makes the growth and/or preservation of the mushrooms independent of external solid media,
characterized in that the circumference of the base part of the holder is smaller than the circumference of the top part, whereby a cavity is formed between the top part and base part of the holder, wherein the cavity is bridged by an intermediate part which forms part of the base part and/or top part of the holder, and wherein the top part is fastened by the intermediate part to the base part by means of a click and/or turning system; and
further characterized in that the base part comprises no, one or more perforations, if present preferably on the underside of the base part; and the intermediate part comprises no, one or more perforations, if absent in the intermediate part there are extra perforations present on the base of the top part of the holder,
wherein the perforations in the top part, intermediate part and/or base part regulate the moisture content and CO₂ content in the holder, and wherein the intermediate part of the holder affords the mushrooms on the side of the base part extra space in order to allow unimpeded growth of the mushrooms.

The invention likewise comprises in one embodiment a holder as described above, wherein the solid mushroom growth medium comprises a mushroom growth layer containing mushroom fruit bodies, and an underlying compost layer containing mycelium.

The invention likewise comprises in one embodiment a holder as described above, wherein the click system comprises (a) projecting horizontal click edge(s) on the inner side of the top part of the holder, and a (preferably interrupted horizontal) click edge on the outer side of the intermediate part. According to the disclosure, the horizontal click edge is preferably an interrupted horizontal click edge.

Furthermore, according to the disclosure, the shape of the perforation may be chosen from the group consisting of a round shape, an oval shape, a linear shape, a polygonal shape, a multifaceted shape, a square shape, a rectangular shape, a hexagonal shape, an octagonal shape, and combinations thereof. According to the invention, the size of the perforations can range between ≥ 0.1 mm and ≤ 30 mm.

The invention likewise comprises in one embodiment a holder as described above, wherein the size of the perforations can be adapted. Adaptation can be performed, preferably by a rotary movement between the base part and the top part of the holder, or by a connecting piece present on top of the intermediate part, which, through twisting, can wholly or partially screen off the perforations.

The invention likewise comprises in one embodiment a holder as described above, wherein the moisture content in the holder is between 30 and 100 %; and wherein the CO₂ content in the holder is between 300 and 5000 ppm %. According to the disclosure, the moisture content in the holder is preferably between 80 and 95 %, yet more preferably between 90-95%; and the CO₂ content in the holder is preferably between 1000 and 2000 ppm.

The invention likewise comprises in one embodiment a holder as described above, further comprising usage instructions for the growth and/or storage of the mushrooms on the base part, intermediate part and/or top part of the holder.

According to the disclosure, the mushroom growth layer may comprise between 1/10 and 9/10 of the mushroom growth medium; preferably 1/5-2/5; and the compost layer may comprise between 9/10 and 1/10 of the mushroom growth medium, preferably 4/5-3/5. Furthermore, the mushroom growth layer can contain a soil with high water capacity.

According to the disclosure, the mushroom growth medium may contain fruit bodies of mushrooms chosen from the group comprising, for example, white mushrooms, chestnut mushrooms, oyster fungus and chestnut champignon, shiitake, purple knight fungus, bunch fungus, parasol fungus, horse mushroom, beech fungus, bunch fungus, chanterelle, enoli, morel, oyster fungus, pied de mouton, pompom blanc, portabella, trompette de la mort; preferably chosen from the *Agaricus bisporus* group; preferably the white mushroom or the chestnut mushroom.

According to the disclosure, the compost layer may be usable for mushrooms, preferably containing cellulose, lignin and/or hemicellulose.

According to the disclosure, the holder can be made of plastic, paper, softboard, cardboard, wood, stone, or combinations thereof.

The invention likewise comprises in one embodiment a method for the commercial growing, transportation and/or sale of mushrooms in a holder as described above, comprising the steps of:
- a) the inoculation of compost, usable for mushroom growth, with mycelium,
- b) the filling of the base part of the holder with the inoculated compost,
- c) optionally, the addition of a mushroom growth layer on top of the compost layer,
- d) the growing of the mycelium in the compost and/or mushroom growth layer and the formation of the mushroom fruit bodies in the holder,
- e) the closure of the base part of the holder with the transparent top part of the holder by means of a click and/or turning system;
- f) the transportation of the holder containing the mushrooms to the sale premises, and
- g) the sale of the holder containing the mushrooms to a middleman and/or consumer.

For the growing, steps a) to e) are indicated. For the growing and transportation, steps a) to f). For the growing, transportation and sale of the holder, steps a) to g) are indicated.

The invention likewise comprises in one embodiment a method as described above, wherein the step of growing the mycelium in the compost and/or the mushroom growth layer and of forming the mushroom fruit bodies d) can take place: (i) after the closure of the holder e), (ii) after the transportation of the holder f), and/or (iii) after the sale of the holder g).

The invention likewise comprises in one embodiment a method as described above, further comprising a step of storing the holder; wherein the storage can take place: (i) after the addition of a mushroom growth layer c) and before or during the growing of the mycelium and/or the formation of the mushroom fruit bodies d), (ii) after the growing of the mycelium and the formation of the mushroom fruit bodies in the holder d), (iii) after the disclosure of the base part of the holder with the transparent top part of the holder e) and before the transportation of the holder containing the mushrooms f), and/or (iv) after the transportation of the holder containing the mushrooms f).

The invention likewise comprises in one embodiment a method as described above, wherein, during the growth of the mushrooms, additional liquid nutrients and/or water is added by the grower, middleman or consumer.

According to the discosure, the mushrooms may be chosen from the group comprising, for example, white mushrooms, chestnut mushrooms, oyster fungus and chestnut champignon, shiitake, purple knight fungus, bunch fungus, parasol fungus, horse mushroom, beech fungus, bunch fungus, chanterelle, enoli, morel, oyster fungus, pied de mouton, pompom blanc, portabella, trompette de la mort; preferably chosen from the *Agaricus bisporus* group; preferably the white mushroom or the chestnut mushroom.

The invention likewise comprises in one embodiment a method as described above, wherein proteins are added to the compost layer. Preferably, proteins are added to the compost layer at a concentration of 20, 30, 40, 50, 60, 70, 80, 90 or 100 g/kg compost.

The invention likewise comprises in one embodiment a method as described above, wherein, for the growth of the mushrooms, the holder is warmed to a temperature which can be chosen between 10 and 24 °C. Preferably, the holder is warmed to a temperature which can be chosen between 17 and 19°C.

The invention likewise comprises in one embodiment a method as described above, wherein, for the storage, transport and sale of the mushrooms, the holder containing mushrooms can be cooled to a temperature which can be chosen between 3 and 22°C. Preferably, the holder containing the mushrooms can be cooled to 5°C.

The invention likewise comprises in one embodiment a method as described above, wherein the consumer, after the harvesting of the mushrooms, can bring about a second, third, fourth fifth and/or sixth round of growth of mushrooms.

According to the disclosure, the steps of inoculating the compost, filling the base part of the holder with the compost, adding a mushroom growth layer, introducing the holder into an incubator for the growing of the mycelium and the formation of the mushroom fruit bodies, closing the base part of the holder, storing the holder and/or transporting the holder may be carried out automatically.

The invention likewise comprises in one embodiment the use of the holder as described above, for the commercial growing, storage, transportation and/or sale of mushrooms.

### DESCRIPTION OF THE FIGURES

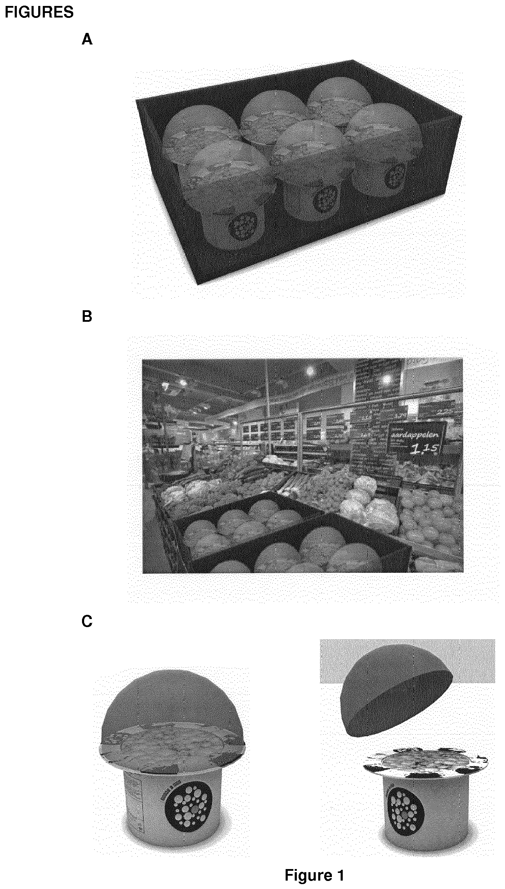

**Figure 1A** illustrates a transport and/or storage bin containing 6 holders according to one of the embodiments of the invention. **Figure 1** **B** illustrates how the holder of the invention can possibly be promoted to the consumer in the store, possibly as part of a full range of vegetables. **Figure 1C** illustrates an individual holder, represented firstly closed (left), then as an open unit (right). According to one of the possible embodiments of the invention, the usage instructions are found on the intermediate part of the holder.

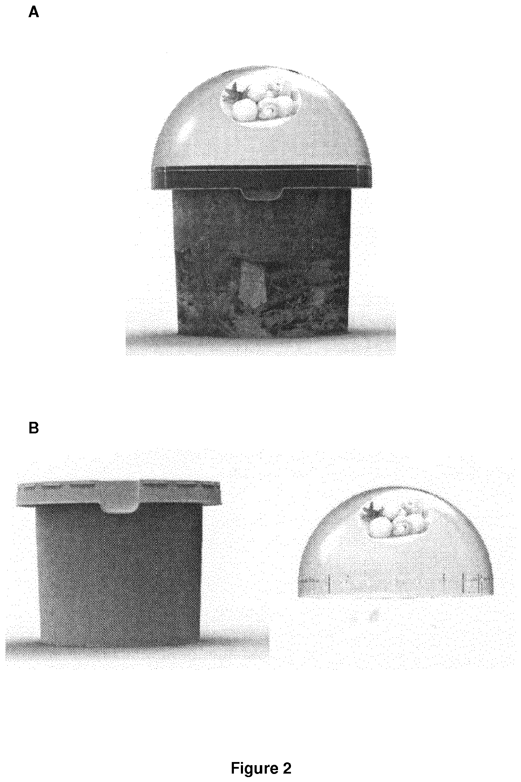

**Figure 2A** illustrates a closed holder according to one of the embodiments of the invention, logo and/or instructions are found on the top part of the holder, the bottom part is imprinted with an in-mold-labeling (IML). **Figure 2B** illustrates on the left-hand side an open holder according to one of the embodiments of the invention with opening for the breakable closure lip and projecting horizontal click edges; on the right-hand side an open top part of the holder with logo and/or instructions and vertical stiffening ribs. These ribs stiffen the base of the top part of the holder and maintain the distances between two top parts or lids stacked one upon the other.

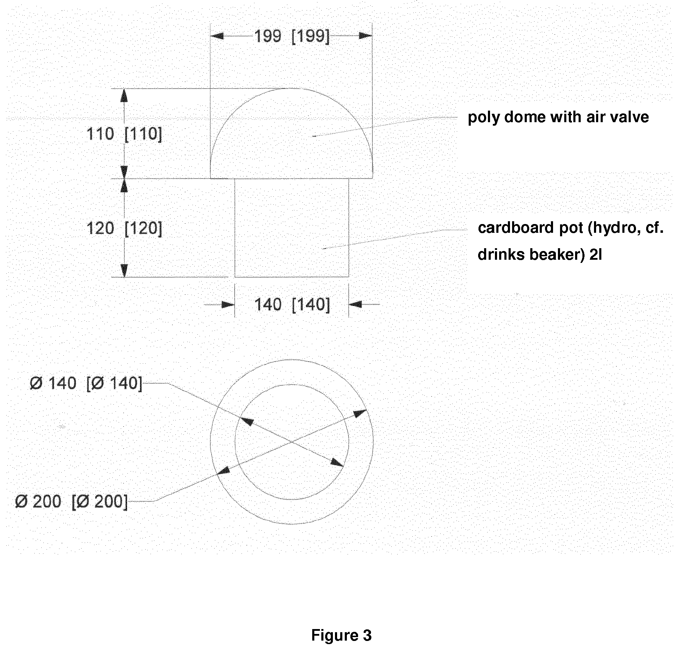

**Figure 3** illustrates dimensions (in millimeters) of the holder according to one of the embodiments of the invention. The top picture illustrates a side view of the holder. The bottom picture illustrates a bottom view of the holder with the statement of the diameter of the base part and top part of the holder.

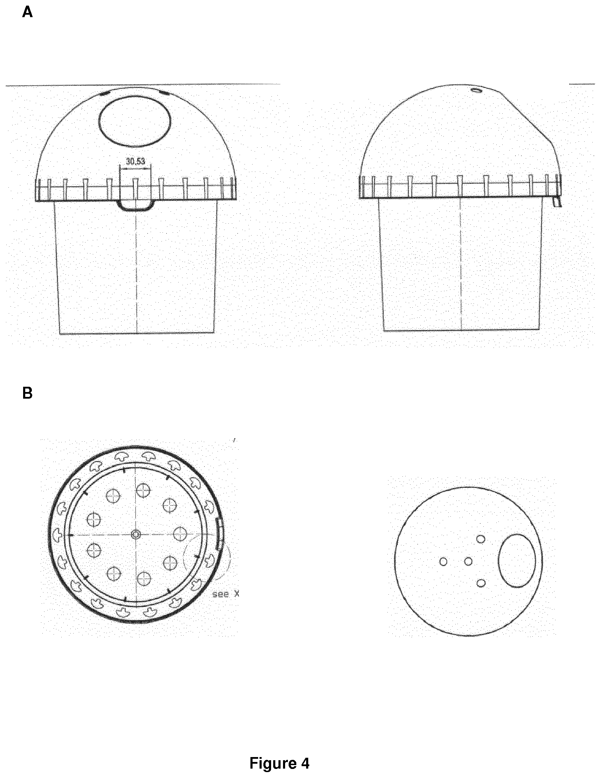

**Figure 4A** illustrates a front view (left) and side view (right) of a closed holder according to one of the embodiments of the invention, having a breakable closure lip and vertical stiffening ribs in the top part of the holder. The horizontal line, running transversely to the stiffening ribs in the top part of the holder, is a projecting click edge on the inner side of the top part of the holder, which fits over the projecting horizontal click edges of the intermediate part of the holder and forms part of the click system. The position of the ventilation openings or perforations (small circle) and instructions and/or logo (large circle) is also indicated. **Figure 4B** illustrates a bottom view (left) and top view (right) of a holder according to one of the embodiments of the invention. On the left, the perforations in the intermediate part (outermost circle) and base part (inner circle) of the holder are discernible. On the right, the perforations (round) on the top of the top part and the place where the instructions (oval) are found are discernible.

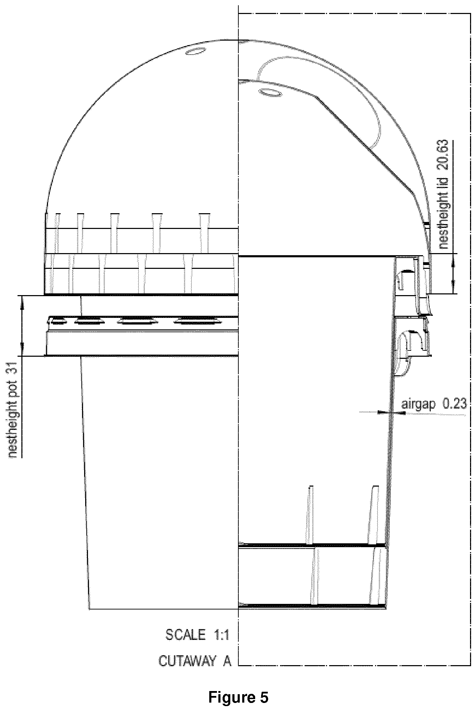

**Figure 5** illustrates the stacking capacity of a holder according to one of the embodiments of the invention. The left half illustrates an external view of the holder, two different top parts are stacked one upon the other, horizontal click edges of the intermediate part are clearly discernible. The right half illustrates an internal view of the holder with stacking lugs on the inner side and underside of the holder, two base parts are stacked one upon the other. Nest height for the base part and top part of the holder, and the airgap present between the different base parts during stacking of the base parts of the holder according to one of the embodiments of the invention, are quoted.

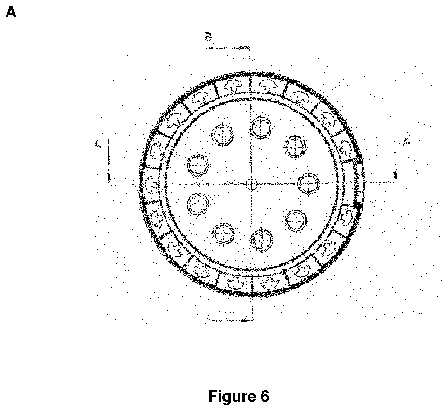

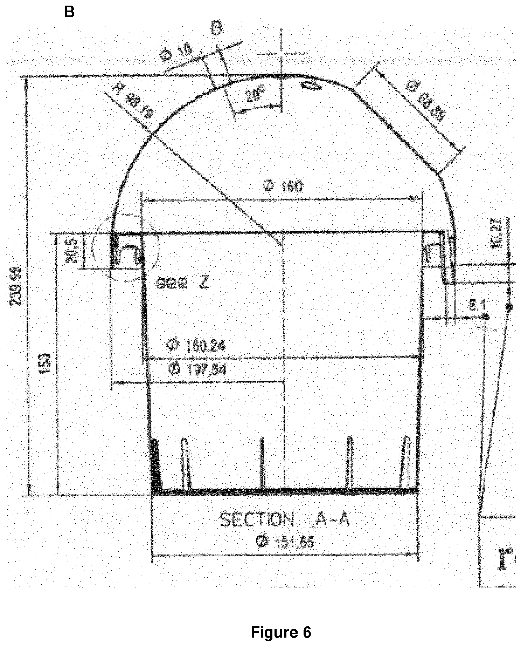

**Figure 6A** illustrates a bottom view of the holder according to one of the embodiments of the invention, with a breakable closure lip system (on the right in the outermost circle), U-shaped stiffening ribs (or ridges) in the intermediate part (which mutually separate the mushroom-shaped perforations in the intermediate part of the holder), and perforations in the base part of the holder (middle) being represented. Longitudinal cross sections of the holder according to one of the embodiments of the invention, sections AA and BB, are represented in figures 6A and 6B. **Figures 6B** (side view) and **6C** (front view) further illustrate the dimensions (in millimeters) and angle values (degrees) of specific parts of the holder according to one of the embodiments of the invention (R= radius in mm; ∅= diameter in mm, ° = degrees).

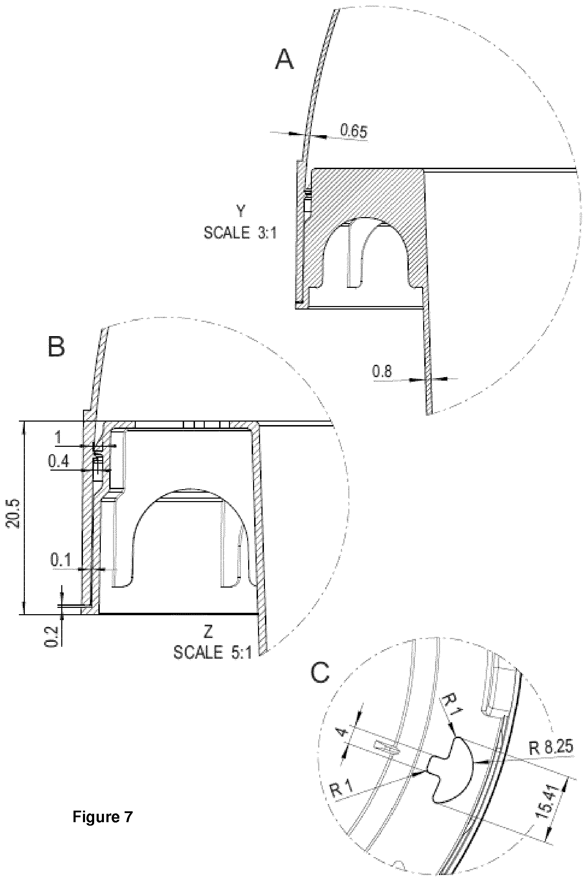

**Figure 7A** illustrates a detailed representation of the U-shaped stiffening ribs in the intermediate part of the holder according to one of the embodiments of the invention. The hatched rib or ridge stands horizontally in front of the field of vision, the behind-situated rib or ridge is represented as an open area; a part of the top part of the holder is also positioned. **Figure 7B** illustrates additionally the connection between the intermediate part and the top part of the holder with the (interrupted) click edges. **Figure 7C** illustrates a detailed representation of a bottom view of one of the perforations in the intermediate part of the holder according to one of the embodiments of the invention.

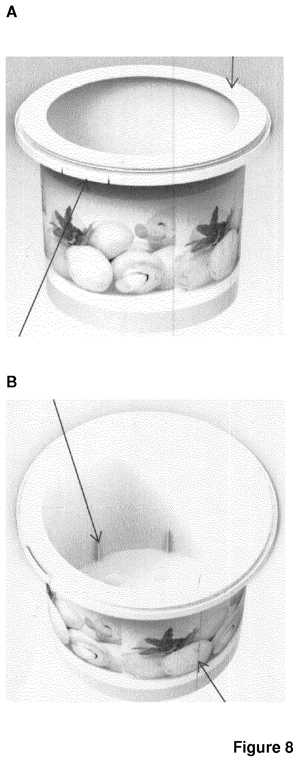

**Figure 8A** illustrates a side/top view of a holder according to one of the embodiments of the invention, with a connecting piece (small arrow) which can be placed on the intermediate part of the holder (large arrow). **Figure 8B** illustrates a side/top view of the holder according to one of the embodiments of the invention, with joint seam of the in-mold-labeling (small arrow) and stacking lugs on the inner side and underside of the holder (large arrow).

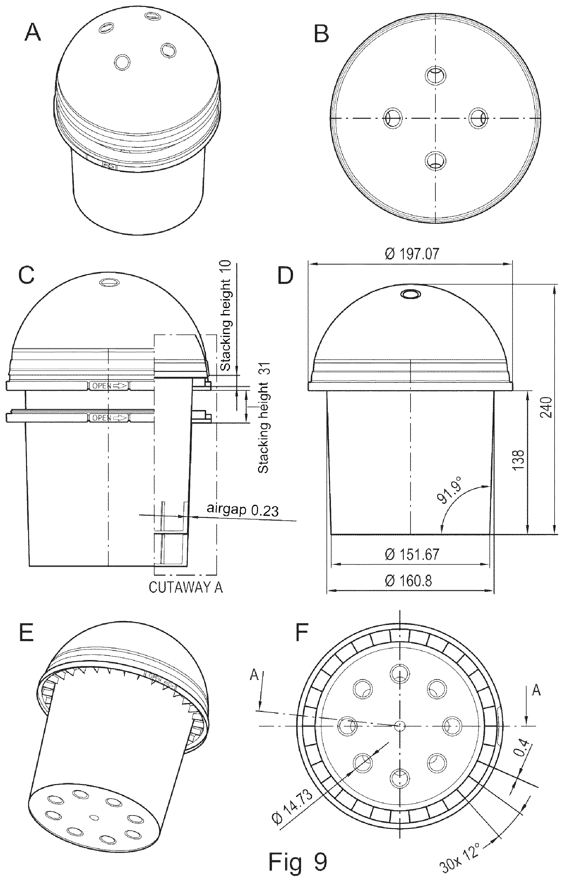

**Figure 9A** illustrates a side/top view of a holder according to one of the embodiments of the invention. **Figure 9B** illustrates a top view of a holder according to one of the embodiments of the invention, perforations in the top part. **Figure 9C** illustrates the stacking capacity of a holder according to one of the embodiments of the invention; direction of rotation, possible size of the airgap and stacking heights are indicated in mm. **Figure 9D** illustrates the possible dimensions of a holder according to one of the embodiments of the invention in millimeters (mm) (∅= diameter in mm, ° = degrees). **Figure 9E** illustrates a bottom/side view of a holder according to one of the embodiments of the invention; straight stiffening ribs in the intermediate part, and perforations in the base part of the holder, are represented. **Figure 9F** illustrates a bottom view of a holder according to one of the embodiments of the invention, with straight stiffening ribs (in the outermost circle) in the intermediate part, and perforations having a diameter of 14.73 mm in the base part of the holder (centermost circle).

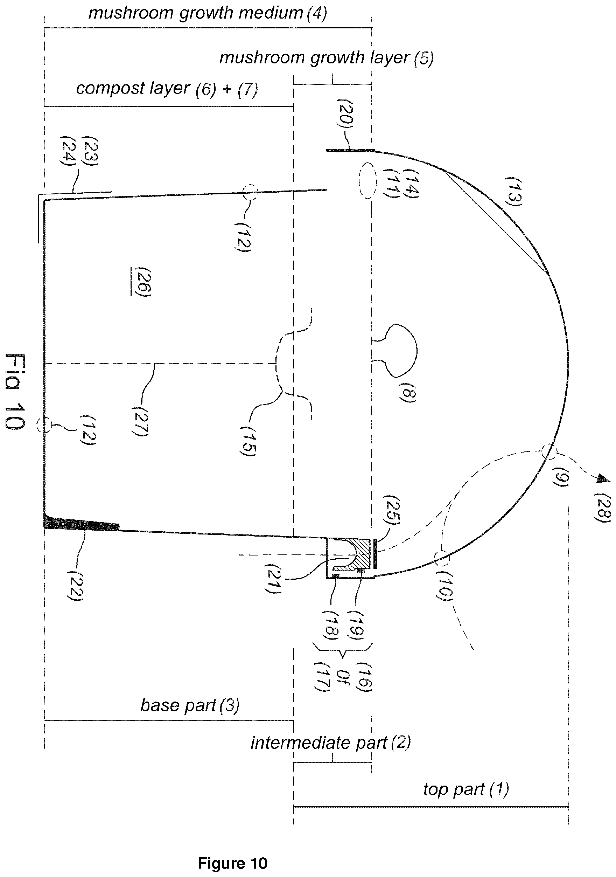

**Figure 10** illustrates a holder with click system according to one of the embodiments of the invention. The reference numerals relate to the following cited parts of the holder:

| | |
|---|---|
| 1 - top part | 2 - intermediate part |
| 3 - base part | 4 - mushroom growth medium |
| 5 - mushroom growth layer | 6 - compost layer |
| 7 - mycelium inoculation | 8 - mushroom fruit body |
| 9 - perforation at top of top part | 10 - perforation at bottom of top part |
| 11 - perforation in intermediate part | 12 - perforation in base part or drainage holes |
| 13 - usage instructions and/or logo | 14 - usage instructions in connecting piece |
| 15 - breakable closure lip or insurance seal | 16 - click system |
| 17 - turning system | 18 - projecting (interrupted) click edge |
| 19 - projecting horizontal click edge | 20 - vertical stiffening ribs |
| 21 - U-shaped edge stiffening ribs | 22 - stacking lugs |
| 23 - clearance or airgap | 24 - nest height or stacking height |
| 25 - connecting piece | 26 - in-mold-labeling (IML) |
| 27 - joint seam | 28- air stream |

### DETAILED DESCRIPTION

As further used in this text, the singular forms "a", "the" comprise both the singular and the plural form unless the context is clearly different.

The terms "comprise", "comprises" as further used are synonymous with "inclusive of", "include" or "contain, "contains" and are inclusive or open and do not exclude additional, unmentionedl, members, elements or method steps. The terms "comprise", "comprises" are inclusive of the terms "contain", "refers to", "is meant", and vice versa.

The listing of numerical values on the basis of the number ranges comprises all values and fractions within these ranges, as well as the cited end points. Stated values also comprise values after the decimal point, such as: x.1, x.2, x.3, x.4, x.5, x.6, x.7, x.8, x.9, x.x1, x.x2, x.x3, x.x4, x.x5, x.x6, x.x7, x.x8, x.x9, x.x1, x.xx2, x.xx3, x.xx4, x.xx5, x.xx6, x.xx7, x.xx8, x.xx9. With the term 'measurable values', reference is made to a measurable value such as a parameter, a quantity, and so on, wherein it is intended to encompass variations of +/- 10% or less, preferably +/-5% or less, more preferably +/-1% or less, and yet more preferably +/-0.1% or less, of and from the specified value, insofar as the variations are of application in order to function in the published invention.

Unless otherwise defined, all terms published in the invention, inclusive of technical and scientific terms, have the meaning as is commonly understood by a person skilled in the art. As a further guideline, definitions are included for further clarification of terms which are used in the description of the invention. Figure 10 gives a schematic representation of a possible embodiment of the invention with reference of the most frequently used terms.

The invention comprises a holder containing mushrooms for the commercial growing, storage, transportation and/or sale of mushrooms, comprising:
a base part, and a transparent top part comprising one or more perforations,
characterized in that the base part of the holder is the bearer of a solid mushroom growth medium which makes the growth and/or preservation of the mushrooms independent of external solid media,
characterized in that the circumference of the base part of the holder is smaller than the circumference of the top part, whereby a cavity is formed between the top part and base part of the holder, wherein the cavity is bridged by an intermediate part which forms part of the base part and/or top part of the holder, and wherein the top part is fastened by the intermediate part to the base part by means of a click and/or turning system; and
further characterized in that the base part comprises no, one or more perforations, if present preferably on the underside of the base part; and the intermediate part comprises no, one or more perforations, if absent in the intermediate part there are extra perforations present on the base of the top part of the holder,
wherein the perforations in the top part, intermediate part and/or base part regulate the moisture content and CO₂ content in the holder, and wherein the intermediate part of the holder affords the mushrooms on the side of the base part extra space in order to allow unimpeded growth of the mushrooms.

The term 'holder' also embraces the terms 'box', 'container', 'pot', 'cultivation cell', 'greenhouse' and 'basket'. According to the disclosure, the holder can be filled with a limited quantity of mushroom growth medium; by limited quantity is meant 0.25-3kg medium, more specifically 0.25, 0.5, 0.75, 1.0, 1.25, 1.5, 1.75, 2.0, 2.25, 2.5, 2.75 or 3.0 kilogram (kg); preferably 1 kg.

The term 'mushroom growth medium' embraces medium which makes the growth and/or preservation of the mushrooms independent of external solid media. By 'external' is meant present outside the holder; given the presence of external medium, the mushroom must, for its growth, draw the nutrients and/or water from the external medium via its foot or mycelium. In the holder of the invention, there is thus no need for the mushroom to keep contact, via the foot or mycelium, with the external environment of the holder. The term 'solid medium' or 'solid media' embraces 'non-liquid medium (media), which can easily retain its position in the holder and which can be added or removed, inter alia via shovel movements.

3000 or so varieties of mushroom varieties have hitherto been identified, though the total number of existing varieties is not known. The invention describes a holder which can be used for growing any type of mushroom; for example for growing edible, inedible, plate fungi, tube fungi, straight growing, obliquely growing or upwardly growing mushrooms. Inedible mushrooms can be used, for example, in low dosage in medicine. Each mushroom variety has its own preferred nutrient medium. Most mushrooms need a compost layer which contains nutrients for growth. Some mushrooms need for their optimal growth an additional light moisture-permeable soil (or mushroom growth layer); for other varieties, this mushroom growth layer is optional. The term 'mushroom growth medium' thus embraces 'mushroom growth medium comprising a mushroom growth layer and compost layer' or 'mushroom growth medium comprising a compost layer'. The current invention focuses mainly on the holder for the growth and/or storage of white and chestnut mushroom, but the findings (holder and method of the invention) can easily also be adapted to the preferred growth condition(s) of each variety. For the white and chestnut mushroom, there is preferably a mushroom growth layer present. Hence the invention in one embodiment preferably comprises a holder as described above, wherein the solid mushroom growth medium comprises a mushroom growth layer containing mushroom fruit bodies and an underlying compost layer containing mycelium.

The term 'mushroom growth layer', 'casing soil', 'moisture-permeable soil' or 'moisture-holding soil' comprises a growth layer which facilitates the growth of specific mushrooms or mycelium by, for example, being better able to regulate the moisture in the mushroom mushroom growth medium. The casing layer is generally a low-nutrient soil layer, in which the mushroom mycelium proceeds to form fruit bodies. Casing soil generally consists of a mixture of peat soil (generally 80%) and earth foam (generally 20%). The peat soil gives the casing soil a soft, strong structure, the earth foam is a calcareous processed by-product of sugar beet processing. The earth foam makes the casing soil heavier and gives the casing soil a pH from 7 to 8. In the casing soil are found specific bacteria, for example Pseudomonas putida, which are indispensable for the formation of mushrooms. The casing soil serves as a water buffer for further cultivation. Preferably, for the cultivation of white mushrooms, the casing soil of the company Sterckx, from Roeselare, Belgium, is used as the mushroom growth layer. The pH of the inoculated compost preferably has a pH value between 6 and 6.5. The preference for the type of casing soil depends on the variety of mushroom, possible examples of types being black peat soil, light brown soil and marl. Marl is a type of calcareous clay. According to the disclosure, the mushroom growth layer can optionally be enriched with mushroom substrate or inoculated compost, preferably in a ratio 5gr/500gr mushroom substrate/casing soil. The term 'cacking' refers to a slightly marbled substrate, which is mixed in with the casing soil for a faster invasion of the mycelium into the casing soil. Preferably there is a homogeneous mixture of the casing soil and the cacking.

Within the context of the health consciousness of the consumer, in the holder of the disclosure preferably all components of the mushroom growth medium of biological origin are used. The holder of the invention makes it possible to maintain the biological conditions not only from the start of the cultivation, but also during cultivation of the mushrooms, in terms of these unique biological factors. Growth factors can be better controlled, so that pesticides no longer have to be used.

The term 'fruit body' refers to the fruit formed by the mycelium of the mushroom which, upon ripening, disperse the spores. The fruit body is formed during the generative phase of the mushroom and is consumed by the consumer. The start of the formation of the fruit body is called 'fruiting'.

The term 'mycelium' refers to a network of long fungal threads, termed hyphae, found in the earth, wood, manure, etc., which swells during the vegetative phase of the mushroom.

The disclosure describes a holder wherein the compost layer is usable for mushrooms, preferably containing cellulose, lignin and/or hemicellulose. The term 'compost' comprises a stable and humus-rich end product, through of composting of (sometimes selectively gathered) organic-biological waste. Compost consists of vegetable remnants (for example vegetables, fruit skins, grass cuttings, leaves, coffee filters, trimmings, ...) which have been broken down by microorganisms almost into humus. It is the result of a natural composting process which can be monitored and controlled by man. It is a product having a high stable organic dust content and nutrients which gradually become available. The mushroom is a saprophyte and grows on dead organic material. The compost or champignon substrate for the growth of white mushroom is preferably made up of wheat straw (carbon source and structure), horse manure (for nutrients), poultry manure (or slurry (as nitrogen source), plaster (as regulator for acidity) and water. Mushroom 'substrate' is generally prepared by the following steps: (i) aerobic fermentation of the abovementioned compost, whereby useful nutrients can be released, (ii) pasteurization and the conditioning of the fermented compost, whereby harmful organisms are killed and degradable sugars are eliminated, nitrogen is incorporated and harmful ammonia is removed. The 'inoculated compost' can then be formed by the inoculation of a mushroom mold (generally in the form of 'spawn' consisting of sterilized rye grains on which the mycelium is placed) onto the substrate. After this inoculation, the mushroom mold can fully colonize the compost. The compost or mushroom substrate in the holder can be, for example, the mushroom substrate of the company Walkro, from Maasmechelen.

According to the disclosure, the holder can have an absence of mushroom fruit bodies; mycelium in the mushroom growth medium, mushroom growth layer and/or compost is present.

According to the invention, the top part of the holder is transparent. The term 'transparent' refers to the possibility of being able to look through it. It is thus easy for the grower and/or consumer to observe, for example, the growth of the mushroom fruit bodies. The transparent top part is designed such that almost no condensation takes place on the inner side of the top part, so that visualization of the mushroom is not prevented.

According to the invention, the intermediate part of the holder can form part of the base part and/or top part of the holder, preferably part of the base part (see, for example, figure 1C, figure 2B, figure 10). In a preferred embodiment, the intermediate part is U-shaped with downwardly directed opening (see, for example, figure 10). In the holder, the surface of the closed part of the U-shape of the intermediate part can stand parallel or obliquely to the surface of the bottommost part of the base part of the holder. If obliquely, the angle between the intermediate part and the vertical walls of the base part can measure 30, 35, 40, 45, 50, 55, 60, 65, 70, 75, 80, 85, 90, 95, 110, 120, 130, 140 or 150 degrees (°). The intermediate part of the holder has the function of comprising possible perforations, and affords the mushrooms on the side of the base part extra space for unimpeded growth of the mushrooms. The width of the bridging or intermediate part is also dependent on the variety of mushroom, the wider the fruit body, the wider the intermediate part, this in order to be able to guarantee this unimpeded growth. The width of this intermediate part can range from 5 to 50 mm.

The angle between the bottommost part (horizontal) and the vertical walls of the base part can vary, preferably between 89 and 94°, preferably 89.0, 89.1, 89.2, 89.3, 89.4, 89.5, 89.6, 89.7, 89.8, 89.9, 90.0, 90.1, 90.2, 90.3, 90.4, 90.5, 90.6, 90.7, 90.8, 90,9, 91.0, 91.1, 91.2, 91.3, 91.4, 91.5, 91.6, 91.7, 91.8, 91.9, 92.0, 92.1, 92.2, 92.3, 92.4, 92.5, 92.6, 92.7, 92.8, 92.9, 93,0, 93,1, 93,2, 93,3, 93,4, 93,5, 93,6, 93,7, 93,8, 93,9, 94,0°; yet more preferably 91.9° (see figure 9D). This produces a difference in cross section between the bottom part and top part of the base part of the holder (see figure 9D). As a result, different holders of the invention can be easily stacked together and separated. The 'airgap' is found between the vertical walls of different base parts stacked one upon another (figure 9C). The width of the airgap can range between 0.01 and 1 cm, preferably 0.2 and 0.3 cm, yet more preferably 0.23 cm (figure 5, figure 9C). The 'stacking height' or 'nest height' determines the distance between same parts of different parts (top, intermediate or base part) of the holder, for the base part the preferred stacking height being 3.1 cm, for the top part 2.06 cm (see figure 5, figure 9C). The 'stacking height' can also refer to the distance between the underside of the intermediate part and the underside of the top part, which can range between 0-20 cm, preferably 0-5 cm, yet more preferably 1.0 cm (figure 9C). In order to be able to be able to facilitate the stacking of the unused holders, stacking lugs are provided on the underside and inner side of the base part of the holder (see figure 5, figure 6B, figure 6C, figure 8B, figure 9C, figure 10). The stacking lugs start preferably on the base of the base part, their length ranges between 0 and 20cm, preferably 5 cm, yet more preferably 3.1 cm; their width ranges between 0 and 2 cm, preferably 1 cm, yet more preferably 0.5 cm.

The cross section of the base part of the holder can range between 10 and 20 centimeters (cm), preferably 10, 11, 12, 13, 14, 15, 16, 17, 18, 19 and 20 cm, yet more preferably 14, 15, 16 cm (figure 3, figure 6B, figure 9D). The cross section of the base of the top part of the holder can range between 10 and 30 cm, preferably 14, 15, 16, 17, 18, 19, 20, 21, 22, 23, 24 cm, yet more preferably 19, 20 cm (figure 3, figure 6B, figure 9D). The cavity bridged between the base part and top part of the holder can range between 5-60 mm, preferably 5, 6, 7, 8, 9, 10, 11, 12, 13, 14 15, 16, 17, 18, 19, 20, 21, 22, 23, 24, 25, 26, 27, 28, 29, 30, 31, 32, 33, 34, 35, 36, 37, 38, 39, 40 mm, yet more preferably 2, 2.5, 3 cm (figure 3, figure 6B, figure 9D). The height of the top part of the holder can range between 1-20 cm, preferably 8, 9, 10, 11, 12, 13, 14 or 15 cm, yet more preferably 10, 11 cm (figure 3, figure 6B, figure 9D).

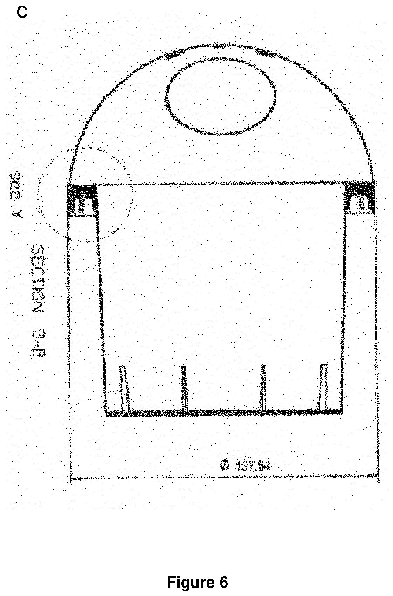

According to the disclosure, the intermediate part of the holder can comprise supporting ribs, perforations and/or a fastening system. Preferably, these supporting ribs are U-shaped (see figure 6C) and/or plate-shaped (see figure 9E). The number of supporting ribs in the holder can range between 1 and 50, preferably 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50 (see figure 6A and figure 9F). The thickness of the supporting ribs can range between 0.01-5 mm, preferably 0.1, 0.2, 0.3, 0.4, 0.5, 0.6, 0.7, 0.8, 0.9 or 1.0 mm; yet more preferably 0.4 mm (figure 9F). The angle between the different ribs can range between 3-180 °, preferably 10, 11, 12, 13, 14, 15, 16, 17, 18, 19 or 20 °; yet more preferably 12 ° (figure 9F), depending on the number of ribs present.

Generally, the holder of the invention consists of two separate parts, which can be fastened to each other and/or detached from each other. These two parts are, for example: top part/intermediate part and base part; top part and intermediate part/base part; or; top part/intermediate part and intermediate part/base part. The fastening system which is used in the holder of the invention is not limited to one type of system. In a preferred embodiment of the invention, in the holder as described above a click system comprising (a) projecting horizontal click edge(s) on the inner side of the top part of the holder, and a (preferably interrupted horizontal) click edge on the outer side of the intermediate part of the holder, is used (see, for example, figure 2B, figure 10). According to the disclosure, in the holder as described above the top part, base part and/or intermediate part may also be connected to one another by means of pins in one part, and holes for the reception of said pins in the other part. Alternatively, in the holder as described above the top part, base part and/or intermediate part may be connected to one another by means of a tamper-evident closure. In a preferred embodiment of the invention, in the holder as described above the top part, base part and/or intermediate part are connected to one another by means of a turning system (see figure 9).

The lid must be easily removable, but stably sealed during transport or in a supermarket. In addition to the click system, the holder can preferably also contain a sealing system. This sealing system makes it possible to keep the holder intactly assembled, whereby the holder is prevented from disintegrating into the individual parts, so that manipulation efficiency is increased and the risk of contamination reduced. With the term 'sealing system', reference is made to a system which is used to fasten or close off something securely and well; opening thereof cannot take place unnoticed. A breakable closure lip is used for this purpose; the holder can be opened after a lip fragment has been broken off.

The term 'perforation' also embraces the term 'opening'. The number of perforations in the top part, intermediate part, and/or base part can vary and determines the exchange capacity of the holder for, inter alia, moisture and CO₂. According to the disclosure, in the top part (top and/or base), intermediate part and/or base part (in base and/or sides), 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 64, 55, 56, 57, 58, 59 or 60 perforations can be present. According to the disclosure, a minimum of one, preferably a minimum of 5, perforation(s) must be present in the top of the top part of the holder, this combined with a minimum of one, preferably a minimum of 5, perforation(s) in the intermediate part or a minimum of one, preferably a minimum of 5, perforation(s) in the base of the top part of the holder. An optimal air stream through the holder is thus obtained, whereby moisture and CO₂ in the holder can easily be kept constant and/or regulated. According to the dislosure, perforations in the base part of the holder are optional. Perforations in the base part can also be termed drainage holes or openings; perforations in the intermediate part and/or top part ventilation openings. If necessary, perforation(s) in the base part can be open or can be closed off with a fixed or movable system, for example with a push-on accessory or rotatable closing system. Through the closure of the drainage openings, contamination via the base part of the holder can be reduced or compost loss via the perforations can be avoided.

According to the disclosure, the shape of the perforation may be chosen from the group consisting of a round shape, an oval shape, a linear shape, a polygonal shape, a multifaceted, arbitrary or irregular shape, a square shape, a rectangular shape, a hexagonal shape, an octagonal shape, and combinations thereof. Recognizable figures can also be used, such as a mushroom or flower motif. In addition, according to the invention the size of the perforations can range between ≥ 0.1 mm and ≤ 30 mm. The perforation can be 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 millimeters (mm), or combinations thereof, in size. The size and numbers of the perforations can be adapted in dependence on the size of the holder, the larger the surface of the holder, and thus also separate parts, the larger and/or higher the numbers which can be provided. The larger the perforations, the faster the execution of the air exchange (ventilation), but the greater the risk of contamination. A balance between the two must thus be respected and can easily be determined by the person skilled in the art.

The determination of the moisture content and/or CO₂ content in the holder can be realized by the application of many known measuring techniques. Preferably, the RH measurement and CO₂ measurement are conducted with the aid of a mobile and calibrated RH meter, and/or CO₂ meter, via the introduction of a tube through one of the perforation openings of the abovementioned holder.

The relative humidity (RH) or moisture content, and CO₂ concentration, in the top part of the holder can thus be varied through the number, position and size of the perforations. The invention likewise comprises in one embodiment a holder as described above, wherein the size of the perforations can be adapted Preferably, perforations are adapted by a rotary movement between the base part and the top part of the holder, or by a connecting piece present on top of the intermediate part, which, through twisting, can wholly or partially screen off the perforations (see figure 8A). Air exchange, hence also air humidity and CO₂ concentration, in the top part of the holder can thus be regulated according to requirement. The invention likewise comprises in one aspect a holder as described above, wherein the moisture content in the holder is between 30 and 100 %; and wherein the CO₂ content in the holder is between 300 and 5000 ppm (parts per million). Preferably, the moisture content in the holder is between 80 and 95 %, and the CO₂ content in the holder is between 1000 and 2000 ppm. Optimal temperature, RH and CO₂ values are dependent on the growth stage and variety of the mushroom. During the vegetative phase, in which the mycelium grows, the optimal relative humidity (RH) is 95-100%, and optimal CO₂ concentration 5000-10.000 ppm or higher. During the generative phase, in which the fruit body grows, the optimal relative humidity (RH) is 90-95%, and optimal CO₂ concentration 1000-2000 ppm. According to the present disclosure, the moisture content can be 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99 or 100 %. According to the present disclosure, the CO₂ content can be 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, 4000, 4100, 4200, 4300, 4400, 4500, 4600, 4700, 4800, 4900 or 5000 ppm. In the generative phase, the mold of the vegetative phase is forced by temperature, CO₂ and air humidity to diminish, resulting in fruiting. In the holder of the invention, a higher or lower RH or CO₂ can thus be obtained by modification of the number of perforations, or size thereof, in the holder.

The top part of the holder can possibly also contain an (optionally adjustable) opening, which enables pouring, spraying and/or irrigation into the holder. The top part can also additionally contain a specific irrigation system which preferably enables uniform watering of the mushroom growth medium.

The disclosure further describes a holder as described above, further comprising a logo and/or usage instructions for the growth and/or the storage of the mushrooms on the base part (see figure 1), intermediate part (see figure 1) and/or top part (see figure 2, figure 4A, figure 4B on the right, figure 6C, figure 10) of the holder. The usage instructions can provide a simple overview in the form of a two-dimensional inscription, or in the form of a document which can be opened out or unfolded.

The disclosure further describes a holder as described above, wherein the mushroom growth layer comprises between 1/10 and 9/10 of the mushroom growth medium; preferably 1/5-2/5; and wherein the compost layer comprises between 9/10 and 1/10 of the mushroom growth medium, preferably 4/5-3/5. Furthermore, according to the description, the mushroom growth layer can contain a soil with high water capacity. Preferably, 1000 gr compost is used in combination with 500 gr mushroom growth layer. The total weight of the holder is preferably between 1200 and 2000 gr.

The disclosure further describes a holder as described above, wherein the mushroom growth medium contains fruit bodies of mushrooms chosen from the group comprising, for example, white mushrooms, chestnut mushrooms, oyster fungus and chestnut champignon, shiitake, purple knight fungus, bunch fungus, parasol fungus, horse mushroom, beech fungus, bunch fungus, chanterelle, enoli, morel, oyster fungus, pied de mouton, pompom blanc, portabella, trompette de la mort; preferably chosen from the *Agaricus bisporus* group; preferably the white mushroom or the chestnut mushroom.

The disclosure further describes a holder as described above, wherein the holder is made of plastic, paper, softboard, cardboard, wood, stone, or combinations thereof. According to the disclosure, the packaging is durable, esthetic, mold-resistant, cheap and/or transport-friendly, preferably recyclable. Yet more preferably, the packaging allows a favorable evaporation and CO₂ exchange as described above. The holder, consisting of the base part, intermediate part and top part, must be able to maintain a virtually constant relative humidity; wherein the constant value is constantly dependent on the growth stage of the mushroom.

The current invention focuses mainly on a holder for the commercial growing, storage, transportation and/or sale of mushrooms, wherein the holder has a round shape. The findings (holder and method of the invention) can, however, be easily adapted to holders with different shapes, such as holders with square shape, rectangular shape, oval shape, a polygonal shape, a multifaceted shape, a hexagonal shape, an octagonal shape, and combinations thereof.

The invention likewise comprises in one embodiment a method for the commercial growing, transportation and/or sale of mushrooms in a holder as described above, comprising the steps of:
- a) the inoculation of compost, usable for mushroom growth, with mycelium,
- b) the filling of the base part of the holder with the inoculated compost,
- c) optionally, the addition of a mushroom growth layer on top of the compost layer,
- d) the growing of the mycelium in the compost and/or mushroom growth layer and the formation of the mushroom fruit bodies in the holder,
- e) the closure of the base part of the holder with the transparent top part of the holder by means of a click and/or turning system;
- f) the transportation of the holder containing the mushrooms to the sale premises, and
- g) the sale of the holder containing the mushrooms to a middleman and/or consumer.

The invention likewise comprises in one embodiment a method as described above, wherein the step of growing the mycelium in the compost and/or the mushroom growth layer and of forming the mushroom fruit bodies d) can take place: (i) after the closure of the holder e), (ii) after the transportation of the holder f), and/or (iii) after the sale of the holder g). Three stages can be distinguished during the growth of mushrooms: 1/ fruiting or fructification, 2/ development of the fruit body 3/ ripening of the fruit body with spore formation. In the method according to the invention, growth can thus be detected at different positions, with in the first phase the fruiting, and, in a later phase, the further development of the fruit body.

The invention likewise comprises in one embodiment a method as described above, further comprising a step of storing the holder ; wherein the storage can take place: (i) after the addition of the mushroom growth layer c) and before or during the growing of the mycelium and/or the formation of the mushroom fruit bodies d), (ii) after the growing of the mycelium and the formation of the mushroom fruit bodies in the holder d), (iii) after the closure of the base part of the holder with the transparent top part of the holder e) and before the transportation of the holder containing the mushrooms f), and/or (iv) after the transportation of the holder containing the mushrooms f).

The invention likewise comprises in one embodiment a method as described above, wherein, during the growth of the mushrooms, additional liquid nutrients and/or water is added by the grower, middleman or consumer. Traditionally, the cultivation bed is sprayed daily with water in order to keep the water management in the compost up to the mark. The holder of the invention allows the relative humidity to be controlled in simple manner. Optimal water quantity can be dependent on the variety of mushroom, and/or the growth stage. The relative humidity is determined by the evaporation (influenced for the perforation numbers and perforation sizes in the holder) and the quantity of water which is added to the mushroom growth medium. For example, before the growth of the mycelium 50 cc; before the growth of the fruit body 10-200 cc; or after the production of fruit 120 cc water/1000 gr mushroom growth medium can be added. Immersion of the holder is also possible, which is not possible in traditional systems. In a preferred embodiment of the method as described above, the holder can be submerged in water during the growth of the mushrooms, preferably after fruiting.

The disclosure likewise describes a method as described above, wherein the mushrooms are chosen from the group as listed above.

According to the disclosure, for the growth of the mushroom mycelium, the holder may be warmed to a temperature which can be chosen between 21 and 26°C; for example to 21, 22, 23, 24, 25 or 26°C; preferably to 22, 23, 24 or 25°C. The invention likewise comprises in one aspect a method as described above, wherein, for the growth of the mushroom fruit bodies, the holder is warmed to a temperature which can be chosen between 10 and 24°C. For example the holder may be warmed up to 10, 11, 12, 13, 14, 15, 16, 17, 18, 19, 20, 21, 22, 23 or 24°C; preferably to 16, 17, 18, 19°C. Preferred temperatures quoted above indicate the preferred temperatures for the white mushroom, while for other varieties other optimal temperatures can apply. As already cited, during the growth of the mushroom three stages can be distinguished, 1/ fruiting or fructification, 2/ development of the fruit body 3/ ripening of the fruit body with spore formation. For the current invention, a mushroom in the first two stages is desired. Since the holder of the invention enables a better controlled growth of mushrooms, it is easier for the grower or consumer to keep the mushroom in these stages. The fruit growth of the mushrooms can further be optimized by the stimulation of natural evaporation through a higher compost temperature (for example 20, 21, 22°C) compared with the air temperature (for example 16, 17, 18, 19°C). If used in this way, the compost temperature in the holder may be roughly equal to the air temperature. Hence, during fruiting, the holder can preferably be cultivated in insulated boxes (cultivation cell), wherein the compost is insulated from the air and wherein somewhat warmer air can be added to the compost. Alternatively, the pot can be insulated, whereby, through the natural heating of the compost, the temperature of the compost becomes higher relative to the air temperature. The temperature in insulated cultivation conditions can be kept under control by means of conditioned air. During the transport, storage and/or sale, the holder can be kept at room temperature. If, during transport, storage and/or sale, growth of the mycelium and/or fruit body is desired, then the optimal conditions desired for this can be applied. If, during the transport, storage and/or sale, growth of the mycelium and/or fruit body is wanted to be stopped, the holder can be cooled. Mushrooms can be cooled at any time at all during their growth. The invention likewise comprises in one aspect a method as described above, wherein, for the storage, transport and sale of the mushrooms, the holder containing mushrooms can be cooled to a temperature which can be chosen between 3 and 22°C. For example, said temperature may be 3, 4, 5, 6, 7, 8, 9, 10, 11, 12, 13, 14, 15, 16, 17, 18, 19, 20, 21 or 22°C, preferably to 5°C. In the case of cooling during transport, an air-conditioned cooling container can be used, for example.

The term 'natural evaporation' refers to the evaporation caused by the temperature difference between the air temperature and the mushroom growth medium temperature, container insulation and/or immersion, but also influenceable by supplementary feed (proteins). Compost warms up automatically after the addition of proteins. Traditionally, in the case of 1 kg compost, 10-15 gr proteins is added. At higher doses, the compost can reach excessive temperatures. In the holder described above, the volume is smaller, whereby the compost is heated less rapidly; the temperature remains much better under control. More proteins can accordingly be added. The invention likewise comprises in one embodiment a method as described above, wherein proteins are added to the compost layer. Preferably, proteins may be added at a concentration of 5, 10, 15, 20, 25, 30, 35, 40, 45, 50, 55, 60, 65, 70, 75, 80, 85, 90, 95, 100, 110, 120, 130, 140 or 150g protein/kg compost, more preferably at a concentration of 50, 75, 100, 125 or 150g protein/kg compost. This supplementary feed can be the Champfood supplement of the company Champfood (Broekkant 10, 5446 PN Wanroij Netherlands). Preferably there is a homogeneous mixture of the supplementary feed and the compost.

The invention likewise comprises in one embodiment a method as described above, wherein the consumer, after the harvesting of the mushrooms, can bring about a second, third, fourth fifth and/or sixth round of growth of mushrooms. The term 'round' or 'flight' refers to the harvest period of the mushroom. The number of flights depends on the growth conditions to which the mushroom is subjected, under optimal growth conditions harvesting can be carried out on various occasions; under poor conditions, only once or twice. The growth conditions are influenced by the used soil variety, temperature, watering etc.... The usage instructions give the consumer preferably clear guidelines for the growing and treatment of the mushrooms, for example suggestions can be given in connection with the watering, lighting, harvesting, temperature and possible cooling of the holder during the growth of the mushroom.

According to the disclosure, in method as described above, the inoculation of the compost, the filling of the base part of the holder with the compost, the addition of a mushroom growth layer, the introduction of the holder into an incubator for the growing of the mycelium, and the formation of the mushroom fruit bodies, the closure of the base part of the holder, the storage of the holder and/or the transportation of the holder, may be carried out automatically.

The invention likewise comprises in one embodiment a use of the holder as described above for the commercial growing, storage, transportation and/or sale of mushrooms.

## Claims

1. A holder containing mushrooms for the commercial growing, storage, transportation and/or sale of mushrooms, comprising:
- a base part (3), and
- a transparent top part (1) comprising one or more perforations (9, 10),
**characterized in that** the base part (3) of the holder is the bearer of a solid mushroom growth medium (4) which makes the growth and/or preservation of the mushrooms (8) independent of external solid media,
**characterized in that** the circumference of the base part (3) of the holder is smaller than the circumference of the top part (1), whereby a cavity is formed between the top part (1) and base part (3) of the holder, wherein the cavity is bridged by an intermediate part (2) which forms part of the base part (3) and/or top part (1) of the holder, and wherein the top part (1) is fastened by the intermediate part (2) to the base part (3) by means of a click and/or turning system (16, 17); and
further **characterized in that** the base part (3) comprises no, one or more perforations (12), if present preferably on the underside of the base part (3); and the intermediate part (2) comprises no, one or more perforations (11), if absent in the intermediate part (2) there are extra perforations (10) present on the base of the top part (1) of the holder, wherein the perforations in the top part (9, 10), intermediate part (11) and/or base part (12) regulate the moisture content and CO₂ content in the holder, and wherein the intermediate part (2) of the holder affords the mushrooms on the side of the base part extra space in order to allow unimpeded growth of the mushrooms.

2. The holder as claimed in claim 1, wherein the solid mushroom growth medium (4) comprises a mushroom growth layer (5) containing mushroom fruit bodies (8), and an underlying compost layer (6) containing mycelium (7).

3. The holder as claimed in claim 1 or 2, wherein the click system (16) comprises (a) projecting horizontal click edge(s) (18) on the inner side of the top part (1) of the holder, and a click edge (19) on the outer side of the intermediate part (2).

4. The holder as claimed in one of claims 1 to 3, wherein the size of the perforations (9, 10, 11, 12) ranges between ≥ 0.1 mm and ≤ 30 mm.

5. The holder as claimed in one of claims 1 to 4, wherein the size of the perforations (9, 10, 11, 12) can be adapted.

6. The holder as claimed in one of claims 1 to 5, wherein the moisture content in the holder is between 30 and 100 %; and wherein the CO₂ content in the holder is between 300 and 5000 ppm.

7. The holder as claimed in one of claims 1 to 6, further comprising usage instructions (13, 14) for the growth and/or storage of the mushrooms on the base part (3), intermediate part (2) and/or top part (1) of the holder.

8. A method for the commercial growing, transportation and/or sale of mushrooms in a holder as defined in one of the previous claims, comprising the steps of:
- a) the inoculation of compost (6), usable for mushroom growth, with mycelium (7),
- b) the filling of the base part (3) of the holder with the inoculated compost,
- c) optionally, the addition of a mushroom growth layer (4) on top of the compost layer (6),
- d) the growing of the mycelium in the compost and/or mushroom growth layer (5, 6) and the formation of the mushroom fruit bodies (8) in the holder,
- e) the closure of the base part (3) of the holder with the transparent top part (1) of the holder by means of a click and/or turning system (16, 17);
- f) the transportation of the holder containing the mushrooms (8) to the sale premises, and
- g) the sale of the holder containing the mushrooms (8) to a middleman and/or consumer.

9. The method as claimed in claim 8, wherein the step of growing the mycelium in the compost and/or the mushroom growth layer (5, 6) and of forming the mushroom fruit bodies (8) d) can take place: (i) after the closure of the holder e), (ii) after the transportation of the holder f), and/or (iii) after the sale of the holder g).

10. The method as claimed in claim 8 or 9, further comprising a step of storing the holder; wherein the storage can take place: (i) after the addition of the mushroom growth layer (5) c) and before or during the growing of the mycelium (7) and/or the formation of the mushroom fruit bodies (8) d), (ii) after the growing of the mycelium (7) and the formation of the mushroom fruit bodies (8) in the holder d), (iii) after the closure of the base part (3) of the holder with the transparent top part (1) of the holder e) and before the transportation of the holder containing the mushrooms (8) f), and/or (iv) after the transportation of the holder containing the mushrooms (8) f).

11. The method as claimed in one of claims 8 to 10, wherein, during the growth of the mushrooms (8), additional liquid nutrients and/or water is added by the grower, middleman or consumer.

12. The method as claimed in one of claims 8 to 11, wherein proteins are added to the compost layer (6).

13. The method as claimed in one of claims 10 to 12, wherein, for the growth of the mushrooms (8), the holder is warmed to a temperature which can be chosen between 10 and 24 °C; and/or; wherein, for the storage, transport and sale of the mushrooms (8), the holder containing mushrooms (8) can be cooled to a temperature which can be chosen between 3 and 22 °C.

14. The method as claimed in one of claims 8 to 13, wherein the consumer, after the harvesting of the mushrooms (8), can bring about a second, third, fourth, fifth and/or sixth round of growth of mushrooms (8).

15. Use of a holder as claimed in one of claims 1 to 7 for the commercial growing, storage, transportation and/or sale of mushrooms (8).

## Patentansprüche

1. Haltevorrichtung, die Pilze zur/zum gewerblichen Kultur, Lagerung, Transport und/oder Verkauf von Pilzen enthält, umfassend:
- einen Basisteil (3) und
- einen transparenten oberen Teil (1), der eine oder mehrere Perforationen (9, 10) umfasst,
**dadurch gekennzeichnet, dass** der Basisteil (3) der Haltevorrichtung der Träger eines festen Pilzwachstumsmediums (4) ist, das das Wachstum und/oder das Erhalten der Pilze (8) unabhängig von äußeren festen Medien macht,
**dadurch gekennzeichnet, dass** der Umfang des Basisteils (3) der Haltevorrichtung kleiner als der Umfang des oberen Teils (1) ist, wodurch ein Hohlraum zwischen dem oberen Teil (1) und dem Basisteil (3) der Haltevorrichtung entsteht, wobei der Hohlraum durch einen Zwischenteil (2) verbrückt wird, der einen Teil des Basisteils (3) und/oder des oberen Teils (1) der Haltevorrichtung bildet, und wobei der obere Teil (1) durch den Zwischenteil (2) mithilfe eines Klick- und/oder Drehsystems (16, 17) an dem Basisteil (3) befestigt ist; und
ferner **dadurch gekennzeichnet, dass** der Basisteil (3) keine, eine oder mehrere Perforationen (12) umfasst, wenn vorhanden vorzugsweise an der Unterseite des Basisteils (3); und der Zwischenteil (2) keine, eine oder mehrere Perforationen (11) umfasst, und wenn in dem Zwischenteil (2) nicht vorhanden, zusätzliche Perforationen (10) an der Basis des oberen Teils (1) der Haltevorrichtung vorhanden sind,
wobei die Perforationen in dem oberen Teil (9, 10), dem Zwischenteil (11) und/oder dem Basisteil (12) den Feuchtegehalt und CO₂-Gehalt in der Haltevorrichtung regulieren und wobei der Zwischenteil (2) der Haltevorrichtung den Pilzen an der Seite des Basisteils zusätzlichen Raum bietet, um unbehindertes Wachstum der Pilze zu ermöglichen.

2. Haltevorrichtung gemäß Anspruch 1, wobei das feste Pilzwachstumsmedium (4) eine Pilzwachstumsschicht (5), die Pilz-Fruchtkörper (8) enthält, und eine darunterliegende Kompostschicht (6), die Mycel (7) enthält, umfasst.

3. Haltevorrichtung gemäß Anspruch 1 oder 2, wobei das Klick-System (16) (einen) vorspringende(n) waagrechte(n) Klickränder(rand) (18) an der Innenseite des oberen Teils (1) der Haltevorrichtung und einen Klickrand (19) an der Außenseite des Zwischenteils (2) umfasst.

4. Haltevorrichtung gemäß einem der Ansprüche 1 bis 3, wobei die Größe der Perforationen (9, 10, 11, 12) in dem Bereich zwischen ≥ 0,1 mm und ≤ 30 mm liegt.

5. Haltevorrichtung gemäß einem der Ansprüche 1 bis 4, wobei die Größe der Perforationen (9, 10, 11, 12) angepasst werden kann.

6. Haltevorrichtung gemäß einem der Ansprüche 1 bis 5, wobei der Feuchtegehalt in der Haltevorrichtung zwischen 30 und 100 % beträgt; und wobei der CO₂-Gehalt in der Haltevorrichtung zwischen 300 und 5000 ppm beträgt.

7. Haltevorrichtung gemäß einem der Ansprüche 1 bis 6, ferner umfassend Verwendungsanleitungen (13, 14) zur Kultur und/oder Lagerung der Pilze an dem Basisteil (3), Zwischenteil (2) und/oder oberen Teil (1) der Haltevorrichtung.

8. Verfahren zur/zum gewerblichen Kultur, Transport und/oder Verkauf von Pilzen in einer Haltevorrichtung gemäß einem der vorstehenden Ansprüche, umfassend die Schritte:
- a) Inokulieren von Kompost (6), der zum Pilzwachstum verwendbar ist, mit Mycel (7),
- b) Füllen des Basisteils (3) der Haltevorrichtung mit dem inokulierten Kompost,
- c) gegebenenfalls Zugeben einer Pilzwachstumsschicht (4) oben auf die Kompostschicht (6),
- d) Wachsenlassen des Mycels in dem Kompost und/oder der Pilzwachstumsschicht (5, 6) und Bilden der Pilz-Fruchtkörper (8) in der Haltevorrichtung,
- e) Verschließen des Basisteils (3) der Haltevorrichtung mit dem transparenten oberen Teil (1) der Haltevorrichtung mithilfe eines Klick- und/oder Drehsystems (16, 17);
- f) Transportieren der Haltevorrichtung, die die Pilze (8) enthält, zu den Verkaufsstätten und
- g) Verkaufen der Haltevorrichtung, die die Pilze (8) enthält, an einen Zwischenhändler und/oder Verbraucher.

9. Verfahren gemäß Anspruch 8, wobei der Schritt des Wachsenlassen des Mycels in dem Kompost und/oder der Pilzwachstumsschicht (5, 6) und des Bildens der Pilz-Fruchtkörper (8) d) erfolgen kann: (i) nach dem Verschließen der Haltevorrichtung e), (ii) nach dem Transport der Haltevorrichtung f) und/oder (iii) nach dem Verkauf der Haltevorrichtung g).

10. Verfahren gemäß Anspruch 8 oder 9, ferner umfassend einen Schritt des Lagerns der Haltevorrichtung; wobei das Lagern erfolgen kann: (i) nach dem Zugeben der Pilzwachstumsschicht (5) c) und vor oder während des Wachstums des Mycels (7) und/oder des Bildens der Pilz-Fruchtkörper (8) d), (ii) nach dem Wachstum des Mycels (7) und/oder dem Bilden der Pilz-Fruchtkörper (8) in der Haltevorrichtung d), (iii) nach dem Verschließen des Basisteils (3) der Haltevorrichtung mit dem transparenten oberen Teil (1) der Haltevorrichtung e) und vor dem Transport der Haltevorrichtung, die die Pilze (8) enthält, f), und/oder (iv) nach dem Transport der Haltevorrichtung, die die Pilze (8) enthält, f).

11. Verfahren gemäß einem der Ansprüche 8 bis 10, wobei während des Wachstums der Pilze (8) zusätzliche Flüssignährstoffe und/oder Wasser von dem Erzeuger, Zwischenhändler oder Verbraucher zugegeben wird.

12. Verfahren gemäß einem der Ansprüche 8 bis 11, wobei zu der Kompostschicht (6) Proteine zugegeben werden.

13. Verfahren gemäß einem der Ansprüche 10 bis 12, wobei für das Wachstum der Pilze (8) die Haltevorrichtung auf eine Temperatur erwärmt wird, die zwischen 10 und 24 °C ausgewählt werden kann; und/oder wobei zur/zum Lagerung, Transport und Verkauf der Pilze (8) die Haltevorrichtung, die Pilze (8) enthält, auf eine Temperatur gekühlt werden kann, die zwischen 3 und 22 °C ausgewählt werden kann.

14. Verfahren gemäß einem der Ansprüche 8 bis 13, wobei der Verbraucher nach dem Ernten der Pilze (8) eine zweite, dritte, vierte, fünfte und/oder sechste Wachstumsrunde von Pilzen (8) durchführen kann.

15. Verwendung einer Haltevorrichtung gemäß einem der Ansprüche 1 bis 7 zur/zum gewerblichen Kultur, Lagerung, Transport und/oder Verkauf von Pilzen (8).

## Revendications

1. Support contenant des champignons pour la culture commerciale, le stockage, le transport et/ou la vente de champignons, comprenant :
- une partie de base (3), et
- une partie supérieure transparente (1) comprenant une ou plusieurs perforations (9, 10),
**caractérisé en ce que** la partie de base (3) du support est le porteur d'un milieu de culture solide pour champignons (4) qui rend la croissance et/ou la conservation des champignons (8) indépendante d'un milieu solide externe,
**caractérisé en ce que** la circonférence de la partie de base (3) du support est plus petite que la circonférence de la partie supérieure (1), ce par quoi une cavité est formée entre la partie supérieure (1) et la partie de base (3) du support, où la cavité est pontée par une partie intermédiaire (2) qui forme une partie de la partie de base (3) et/ou de la partie supérieure (1) du support, et où la partie supérieure (1) est fixée par la partie intermédiaire (2) à la partie de base (3) au moyen d'un système de cliquet et/ou de rotation (16, 17) ; et
**caractérisé en outre en ce que** la partie de base (3) comprend zéro, une ou plusieurs perforations (12), si elles sont présentes, de préférence sur la face inférieure de la partie de base (3) ; et la partie intermédiaire (2) comprend zéro, une ou plusieurs perforations (11), si elles sont absentes dans la partie intermédiaire (2), il existe des perforations supplémentaires (10) présentes sur la base de la partie supérieure (1) du support,
où les perforations dans la partie supérieure (9, 10), la partie intermédiaire (11) et/ou la partie de base (12) régulent la teneur en humidité et la teneur en CO₂ dans le support, et où la partie intermédiaire (2) du support fournit les champignons sur le côté de l'espace supplémentaire de la partie de base afin de permettre une croissance sans obstacle des champignons.

2. Support selon la revendication 1, dans lequel le milieu de culture solide pour champignons (4) comprend une couche de culture de champignons (5) contenant des sporophores de champignons (8) et une couche de compost sous-jacente (6) contenant du mycélium (7).

3. Support selon la revendication 1 ou 2, dans lequel le système de cliquet (16) comprend un ou plusieurs bord(s) de cliquet horizontaux en saillie (18) sur le côté interne de la partie supérieure (1) du support, et un bord de cliquet (19) sur le côté externe de la partie intermédiaire (2).

4. Support selon l'une des revendications 1 à 3, dans lequel la taille des perforations (9, 10, 11, 12) se trouve dans la plage comprise entre ≥ 0,1 mm et ≤ 30 mm.

5. Support selon l'une des revendications 1 à 4, dans lequel la taille des perforations (9, 10, 11, 12) peut être adaptée.

6. Support selon l'une des revendications 1 à 5, dans lequel la teneur en humidité dans le support est comprise entre 30 et 100% ; et où la teneur en CO₂ dans le support est comprise entre 300 et 5000 ppm.

7. Support selon l'une des revendications 1 à 6, comprenant en outre des instructions d'utilisation (13, 14) pour la croissance et/ou le stockage des champignons sur la partie de base (3), la partie intermédiaire (2) et/ou la partie supérieure (1) du support.

8. Méthode destinée à la culture commerciale, au transport et/ou à la vente de champignons dans un support tel que défini selon l'une des revendications précédentes, comprenant les étapes :
a) d'inoculation du compost (6), utilisable pour la culture des champignons, par du mycélium (7),
b) de remplissage de la partie de base (3) du support par le compost inoculé,
c) éventuellement, d'addition d'une couche de culture de champignons (4) au-dessus de la couche de compost (6),
d) de culture du mycélium dans le compost et/ou la couche de culture de champignons (5, 6) et de formation des sporophores de champignons (8) dans le support,
e) de fermeture de la partie de base (3) du support avec la partie supérieure transparente (1) du support au moyen d'un système de cliquet et/ou de rotation (16, 17) ;
f) de transport du support contenant les champignons (8) vers les locaux de vente, et
g) de vente du support contenant les champignons (8) à un intermédiaire et/ou un consommateur.

9. Méthode selon la revendication 8, dans laquelle l'étape de croissance du mycélium dans le compost et/ou la couche de culture de champignons (5, 6) et de formation des sporophores de champignons (8) d) peut avoir lieu : (i) après la fermeture du support e), (ii) après le transport du support f), et/ou (iii) après la vente du support g).

10. Méthode selon la revendication 8 ou 9, comprenant en outre l'étape de stockage du support ; où le stockage peut avoir lieu : (i) après l'addition de la couche de culture de champignons (5) c) et avant ou pendant la croissance du mycélium (7) et/ou la formation des sporophores de champignons (8) d), (ii) après la croissance du mycélium (7) et la formation des sporophores de champignons (8) dans le support d), (iii) après la fermeture de la partie de base (3) du support avec la partie supérieure transparente (1) du support e) et avant le transport du support contenant les champignons (8) f), et/ou (iv) après le transport du support contenant les champignons (8) f).

11. Méthode selon l'une des revendications 8 à 10, dans laquelle, pendant la croissance des champignons (8), des nutriments liquides supplémentaires et/ou de l'eau sont ajoutés par le cultivateur, l'intermédiaire ou le consommateur.

12. Méthode selon l'une des revendications 8 à 11, dans laquelle des protéines sont ajoutées à la couche de compost (6).

13. Méthode selon l'une des revendications 10 à 12, dans laquelle, pour la croissance des champignons (8), le support est réchauffé jusqu'à une température qui peut être choisie entre 10 et 24°C ; et/ou où, pour le stockage, le transport et la vente des champignons (8), le support contenant des champignons (8) peut être refroidi jusqu'à une température qui peut être choisie entre 3 et 22°C.

14. Méthode selon l'une des revendications 8 à 13, dans laquelle le consommateur, après la récolte des champignons (8), peut provoquer une deuxième, troisième, quatrième, cinquième et/ou sixième série de croissance de champignons (8).

15. Utilisation d'un support selon l'une des revendications 1 à 7, pour la culture commerciale, le stockage, le transport et/ou la vente de champignons (8).
